# EUROPEAN PATENT SPECIFICATION

(11) **EP 1 906 726 B1**
(45) Date of publication and mention of the grant of the patent: **21.08.2019**
(21) Application number: 06753343.0
(22) Date of filing: 10.07.2006
(51) Int. Cl.: A01J 5/01, G01F 1/52, G01F 23/24

(54) **A MEASURING DEVICE FOR MILK FLOW**
MESSVORRICHTUNG FÜR MILCHFLUSS
DISPOSITIF DE MESURE DE DÉBIT DE LAIT

(30) Priority: 08.07.2005 DK 200501015
(43) Date of publication of application: 09.04.2008
(73) Proprietor: AKTIESELSKABET S.A. CHRISTENSEN & CO., DK-6000 Kolding (DK)
(72) Inventor: LINDHOLST, Torben, K., 6000 Kolding (DK); POULSEN, Henning, 6640 Lunderskov (DK)
(74) Representative: Zacco Denmark A/S
(86) International application number: PCT/DK2006/000406
(87) International publication number: WO 2007/006311

(56) References cited:
- EP-A2- 1 443 313
- US-A- 4 433 577
- US-A- 4 452 176
- US-A- 4 476 719
- US-A- 5 877 417
- US-A1- 2003 130 808

## Description

The invention relates to a device for the measurement of the flow of milk in a mixture of milk and air, comprising air separation means and a leaky measuring chamber with conductivity electrodes, whereby the level of milk in the measuring chamber is converted to a flow measure.

The art related to the monitoring of milking processes contains many examples of electrical measurements of milk flow. A number of these measurements are based on the determination of the level of milk inside a leaky measuring chamber, calculating or using empirical data to convert the level to the rate of flow. Such measurements are described in e.g. WO 2003/058174. In this case, the milk flow enters a measuring chamber via a splash plate that separates the admixed air from the milk, and the level of milk is measured by a stepped set of electrodes fixed to the bottom of the chamber, while the milk escapes through a vertical slit in the measuring chamber and rejoins the air while flowing downstream. This construction has electrical parts that appear on the lower outside of the apparatus, and this may be impractical in a milking parlour environment.

A similar construction may be found in US 4,433,577 that describes the use of a reference electrode in the bottom of the chamber, combined with a series of vertically disposed level indicating electrodes in the wall of the chamber. Such electrodes all suffer from problems with moist films (one extreme of conductivity) or wetting problems (another extreme of conductivity), as described in EP 0 352 497, in which a stepped set of electrodes with a specific distribution of the conductive areas is described.

From US 4,476,719 a device according to the preamble of claim 1 is known. A further problem with the measurement of the flow of in particular fresh milk is foaming or frothing, i.e. that a mixture of milk and air is to a certain degree stable, i.e. not immediately separable without an appreciable time delay. When taking the level of milk plus froth as an expression of the amount of milk, this is a volume measurement that does not take into account that the specific gravity of the mixture is less than that of milk without the admixed air. On the other hand, the froth will be mainly on top of the milk, which enables a degree of correction based on experience. This, however, is not sufficient for a precision milk flow measuring device. It is hence an important feature of a measuring device for milk flow of the type described herein to provide means that will break up the foam and reduce its influence as much as possible.

These disadvantages are avoided in a construction according to the invention, which is particular in that the milk is distributed to flow essentially only towards a first array of measurement electrodes, while a second array of measurement electrodes are covered to the instant level of the milk in the measuring chamber, thereby generating a continuous level indication based on conductivity. The conductivity between the electrodes is continuously monitored, and the electrodes are conductive rods that respond to a continuous level change. It should be noted that the measuring device is designed to be essentially vertical.

According to an embodiment of the invention the first set of measurement electrodes are reference electrodes for the measurement. The purpose of the reference electrodes is that they are designed to provide a basic conductivity measure for their particular geometry, i.e. their placement with respect to each other. The distribution of the in-flowing milk to these electrodes serves to keep them covered in milk and to reduce the turbulence around the electrodes in the second array of electrodes, the measurement electrodes. The reference electrodes have to provide a correct and stable signal even when the milk level in the measurement chamber is low. The conductivity of milk is dependent on several factors, amongst which are temperature and the health of the animal. Only when this fundamental conductivity property of the milk to be measured is assessed is it possible to use the signal from the measurement electrodes as an expression of the level to which they are covered with milk. Any variation in the conductivity measured by the reference electrodes is monitored and sudden deviations is an indication that some unstable condition has occured.

According to a further embodiment of the invention the first array of measurement electrodes consists of two pairs that are interconnected in such a way that the lowest conductivity measurement between members of one pair is automatically selected as the reference value at any one instant. This means that adhesion of a soft lump of material that may be generated by inflammation in part of the udder to a reference electrode or bridging the gap between the electrodes in a set does not disturb the measurement as such.

According to a further embodiment of the invention, the elements that distribute the flow of milk comprise a saddle-shaped plate over which the milk flows, with lower edges close to the reference electrodes. This particular shape has the advantage that it does not trap air that would prevent efficient cleaning by rinsing.

According to a further embodiment of the invention, the leak of the measuring chamber is a vertical slit in a vertical discharge tube fitted inside an essentially ring-shaped measuring chamber. In this manner the air that was separated may rejoin the milk that has passed through the measuring chamber by passing through the upper open end of the discharge tube as well as through the upper end of the vertical slit.

A further advantageous embodiment is particular in that the vertical discharge tube is placed excentrically inside the measuring chamber. This has the particular advantage that if the milk is primarily directed towards the narrower part of the essentially ring-shaped measurement chamber, then the cross section it meets will gradually increase as it fills the chamber, and in consequence its velocity drops.

A further advantageous embodiment is particular in that the elements that distribute the flow of milk comprise an inclined tray, directing the flow primarily to those parts of the essentially ring-shaped measuring chamber that are farthest from the reference and measurement electrodes. This has the advantageous effect that the milk flow is slowed down so that the level does not swing wildly at the measurement electrodes. The inclination of the tray ensures that no air is trapped that would prevent efficient cleaning by rinsing.

In a further advantageous embodiment the the elements that distribute the flow of milk comprise an inlet tube that is directed tangentially to the measuring chamber and that the flow of milk performs a rotating, foam-breaking movement around the outer perimeter of the measuring chamber before encountering the arrays of electrodes. This represents a way of damping the flow irregularities that does not increase the flow resistance of the milk passage, and this is an advantage for the dynamic range of measurement.

The effect of slowing down is further increased in an embodiment that is distinguished by a baffle providing a ring-shaped opening close to the outer perimeter of the measuring chamber. This means that waves in the milk surface derived from a sudden influx will disperse in the upper part of the measuring chamber before arriving to the lower part.

According to a further embodiment of the invention the vertical slit increases its width towards the top. Hereby the flow capacity increases when the flow is large, and a constant relative precision may be obtained.

According to an advantageous embodiment the vertical slit is made of two conductive parts that are insulated from one another. This construction is utilized in a measurement setup in which the two conductive parts function as the measurement electrodes. In this way, the mechanical rigidity that is required for a calibrated slit is also used to ensure that the distance between the measurement electrodes is maintained, in order to make the level the only variable in the measurement, the other variables being compensated by the reference electrodes.

In a further advantageous embodiment of the invention the measuring chamber and the discharge tube form a separable lower section of the device, while the electrodes and the distributing elements form an upper section of the device, which furthermore contains electronic, calculating, data transmission, and indicating means. In this way, the electronics and all measurement electrodes are completely contained in the upper part, and the lower cup-like part only consists of liquid flow elements. The lower part is thereby eminently suited to automated manufacture.

The device according to the invention is very suitable for being used in an apparatus for totally automated milking, such a use further comprising the use of a pulsator monitor and mechanical milking claw attachment and disengagement devices.

The invention will be further described with reference to the drawing, in which
Fig. 1 shows a section from the side of an embodiment of the invention,
Fig. 2 shows a section from the side of a different embodiment of the invention,
Fig. 3 shows a section trough a measuring chamber,
Fig. 4 shows a section from the side for a further embodiment of the invention comprising a tangential inlet and a baffle,
Fig. 5 shows a section through a measuring chamber with a tangential inlet
Fig. 6 shows a slit for the use in the invention,
Fig. 7 shows the bottom part of the measurement device with the slit and electrodes,
Fig. 8 shows a slit composed of mutually insulated metal parts, and
Fig. 9 shows the bottom part of the measurement device with the slit of Fig. 8 and the electrode configuration.

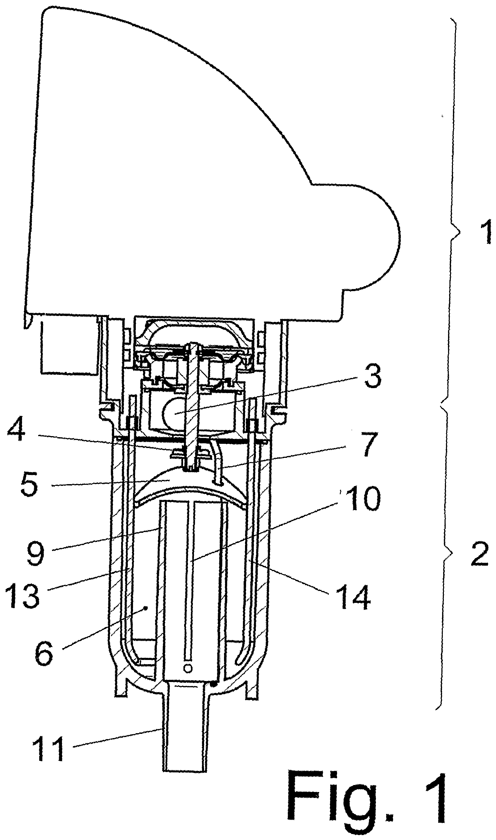

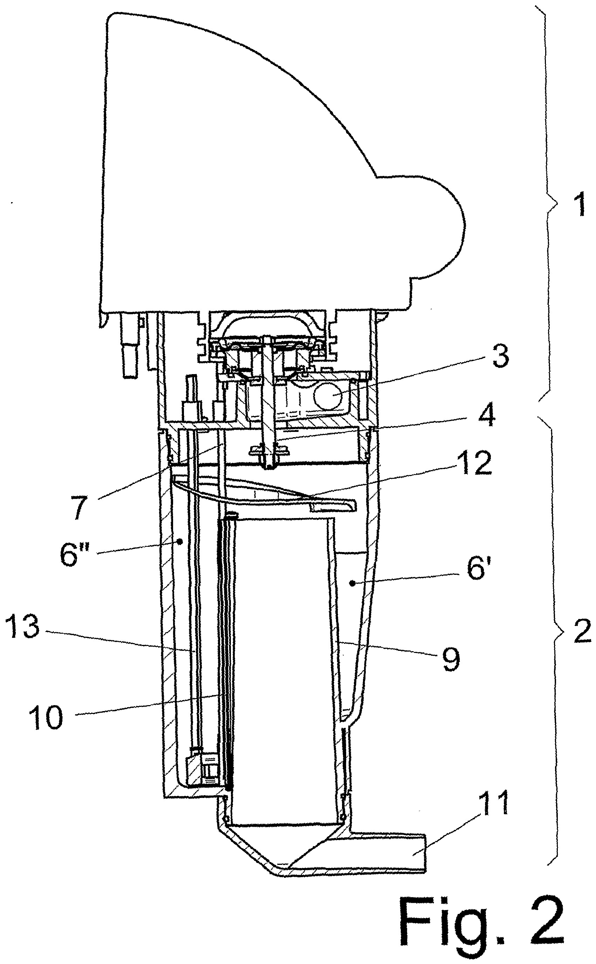

In Fig. 1 is shown a number of parts that are common to the various embodiments of the invention. The milk flow measuring device consists of an upper part 1 and a lower part 2 that are joined via gasket means. The upper part is a control centre with interfaces for manual input and facilities for conductivity measurement relating to electrodes in contact with the milk. The electrodes project downwards from the upper part and are of two types: reference electrodes 13 and 14 and measurement electrodes 7 and 8. These electrodes pass through a specially shaped distributor plate 5 and are insulated above this plate. Details of the reference electrodes vary according to the embodiment and are seen clearly on Figs. 2-5 and 7-9.

The upper part 1 carries a conduit for entry of milk (mixed with air) 3 and a valve 4. The valve 4 is at least partially controlled by vacuum in the conduit 3, but it may also be controlled by electronic circuitry in the upper part. The upper part 1 is fixed to a railing in the milking parlour (not shown). When the valve 4 is open, milk and air pass down into the lower part 2 and exit via conduit 11.

The lower part is divided into two sections; an outer ring-shaped measuring chamber 6 and an inner, concentric discharge tube 9 that is connected to the exit conduit 11. The reference electrodes 13 and 14 as well as the measurement electrodes 7 and 8 are placed in the measuring chamber 6, and the reference electrodes 13 and 14 come close to the bottom of the measuring chamber and are bent in the present embodiment to follow the ring shape of the chamber close to the bottom. This is done in order to obtain a large area in contact with the milk at the bottom of the measuring chamber. Only the measurement electrode 7 is shown in the figure. The reference electrodes are generally insulated almost to the bottom in order not to be influenced by the varying levels of milk, and the measurement electrodes are bare in order to obtain the variation due to the varying levels. However, a further reference electrode may be provided that is also bared to a particular level, in order to provide a quick indication of reaching a particular, calibrated flow. Furthermore, this particular reference electrode may be used to automatically compensate for certain deviations from the vertical up to ± 15°.

When milk mixed with air is let into the measuring device via the valve 4, it is distributed by means of the distributor plate 5 to the ring-shaped measuring chamber in a particular pattern, while the air is separated. Care is taken that no milk enters into the mouth of the inner discharge tube 9, because that would be milk that would not contribute to the measurement. However, the entrapped air will be given free passage under the distributor plate 5. The distribution is such that the milk arrives first at the reference electrodes 13, 14 when it enters the measuring chamber 6, while the measurement electrodes 7, 8 are not subjected to wildly varying changes in milk level. The saddle shape of the distributor plate 5 of the present embodiment ensures that during rinsing no air can be trapped below the plate, which means that all parts of the surface may be efficiently rinsed.

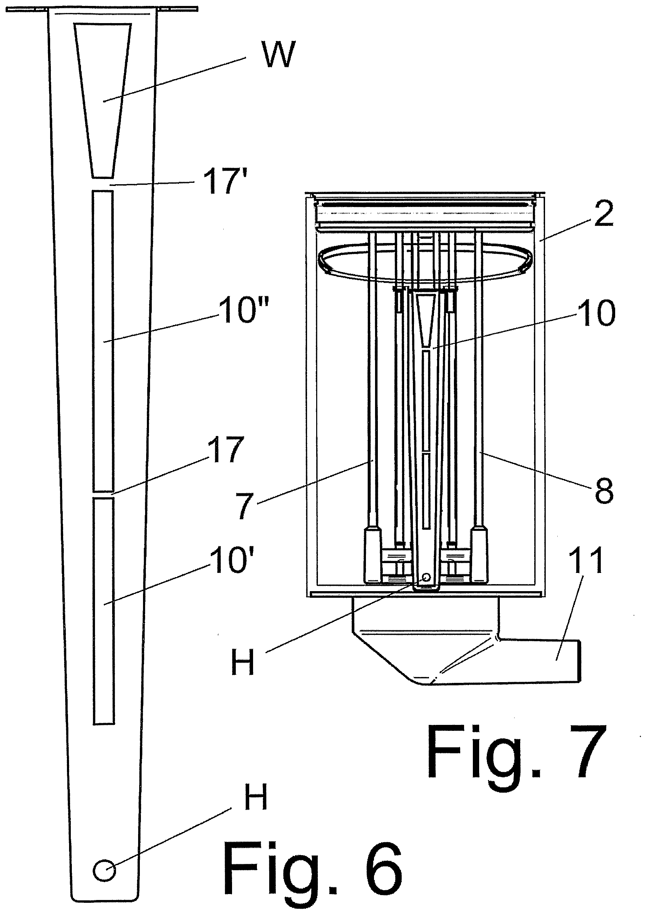

Even with a low level of milk in the measuring chamber 6 it begins to drain through a vertical slit structure 10 in the discharge tube 9, namely through a hole provided near the bottom, and the drainage increases with the flow of milk into the measuring device. The slit 10 is precision manufactured in order to provide the precision required in the measurement, and furthermore the edges are made thin in order to reduce the influence of the surface tension of the milk. The slit 10 constitutes the leak that continuously drains the measuring chamber, and it may be considered to have an area that increases with the level of milk in the measuring chamber. The air in the milk that was separated above the distributor plate 5 passes through the discharge tube and through the free part of the slit and meets the milk that drains through the slit 10. The range of flows that can be handled by the measuring device is increased by making the slit 10 wider towards the top, as is shown in Fig. 6. The instantaneous level of milk in the measuring chamber is a measure of the difference between the in-flux of milk and the discharge and is measured by means of a conductivity measurement relating to the reference and measurement electrodes respectively. Impedance and conductivity are reciprocal. The level may be converted to flow information, either by the use of a calibration table or by calculation, which may occur by analogue or digital means. The reading is available on a display in the upper part 1 of the measuring device. The electronics in the upper part 1 may contain logging means for this information and a data transmission interface may be provided.

In Fig. 2 is seen a similar construction to that in Fig. 1, and identical elements have been given the same identifiers. The major differences are: the discharge tube 9 is placed excentrically in the measuring chamber 6', 6", which means that the ring-shape has a varying cross section. The distributor plate 12 is tray-shaped and sloping towards the narrow cross section 6' of the measuring chamber, and the stream of milk is divided so that it moves in parallel behind and in front of the plane of the drawing to first reach the reference electrodes 13, 14 (of which only reference electrode 13 is shown), and then the measurement electrodes 7, 8 (of which only measurement electrode 7 is shown). The velocity of the milk is reduced because it encounters a larger cross section before reaching the electrodes. The slit structure 10 is facing the sets of electrodes in the left side of the drawing. The discharge tube 9 is connected to the conduit 11, which is fitted in a swivelling manner to the bottom 2 of the measuring device.

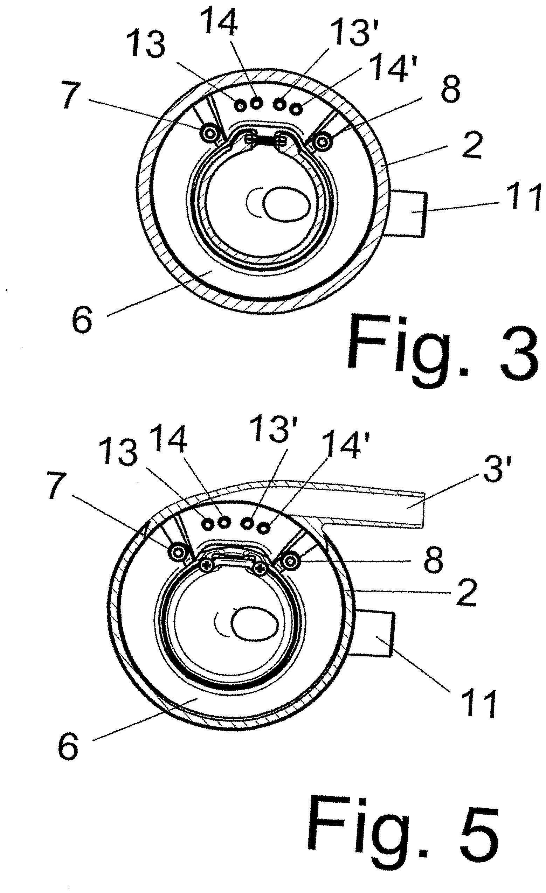

In an advantageous embodiment the array of reference electrodes consists of two sets of reference electrodes 13, 14, 13', 14', seen in Figs. 3 and 5, and the respective conductivities between both sets of electrodes are monitored. When there is a deviation, the electrode set displaying the lowest conductivity is chosen as the reference. The higher conductivity may be caused by adhesion of a lump of partly coagulated milk, which may occur because of a diseased animal. While the flow may still be measured, an alarm will also be activated.

In Fig. 3 is shown a view looking down into the lower part 2 of the measuring device. The conduit 11 projects to the right, and the reference electrodes 13, 14, 13', 14' are indicated. As the milk comes from the narrow part 6' of the measuring chamber and streams towards the electrodes, the streams will follow the outer perimeter of the measuring chamber and reach the reference electrodes 13, 14, 13', 14' first, because they are closest to the wall.

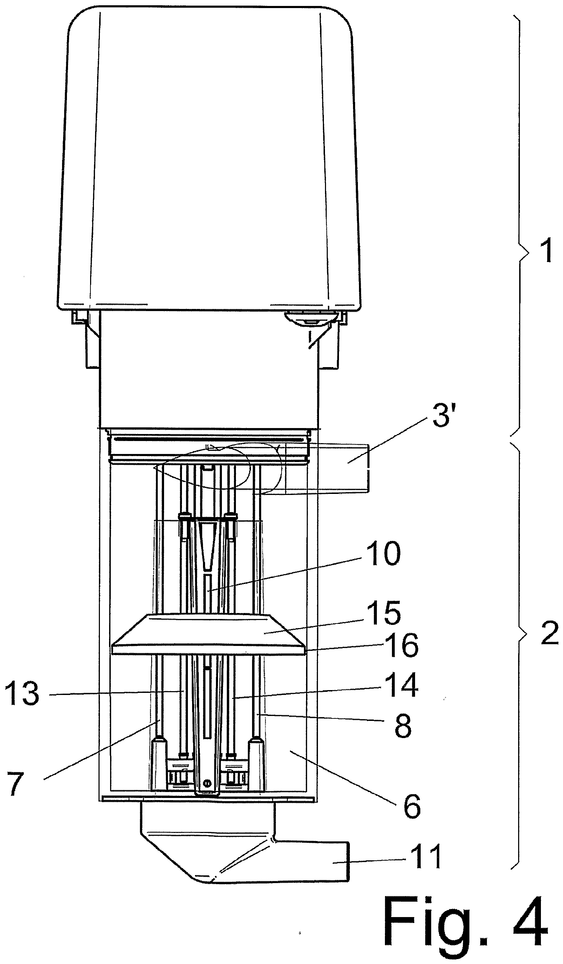

In Fig. 4 is seen a third embodiment of the invention. In this embodiment the distributor plate (5 in Fig. 1, 12 in Fig. 2) has been dispensed with, because the inlet 3' is tangential to the measuring chamber, and the stream of milk is given a swirling motion which makes it circulate around the outer perimeter of the measuring chamber. The inlet 3' is behind the plane of the drawing and the measuring slit 10 is in front of the plane of the drawing. It is also shown that a baffle 15 is placed between the top and the bottom of the lower part 2 of the measuring device, with a ring-shaped space 16 between the baffle 15 and the outer wall. This construction effectively dampens the irregularities in the milk flow before it reaches the electrodes, however at high levels corresponding to high flow rates, the baffle has no direct effect, whereas the static pressure that decides the level of milk is still completely available all the way down to the bottom of the measuring chamber 6.

In Fig. 5 is a view looking down into the lower part 2 of the measuring device of the embodiment described with reference to Fig. 4, in which it will be realized that the swirling action of the milk entering through the conduit will not be able to form a stable conductivity measurement between the two measurement electrodes 7 and 8 until a reasonably stable level has been established from the bottom up in the measuring chamber 6.

In Fig. 6 is shown a slit structure 10, which is precision manufactured in an anti-corrosive metal sheet. The slit itself is formed of two parts of identical width 10' and 10", with stays 17 and 17' formed in the sheet metal to maintain width of the long slit in the thin sheet. Towards the top the slit is given a widening W in order to increase the dynamic range withouth sacrificing the utility of the measuring device. Near the bottom a drainage hole H is provided for very low flows approaching zero, in order that stale milk does not collect in the measuring chamber 6.

In Fig. 7 is shown how this slit structure is disposed in the lower part 2 of the measuring device according to the invention.

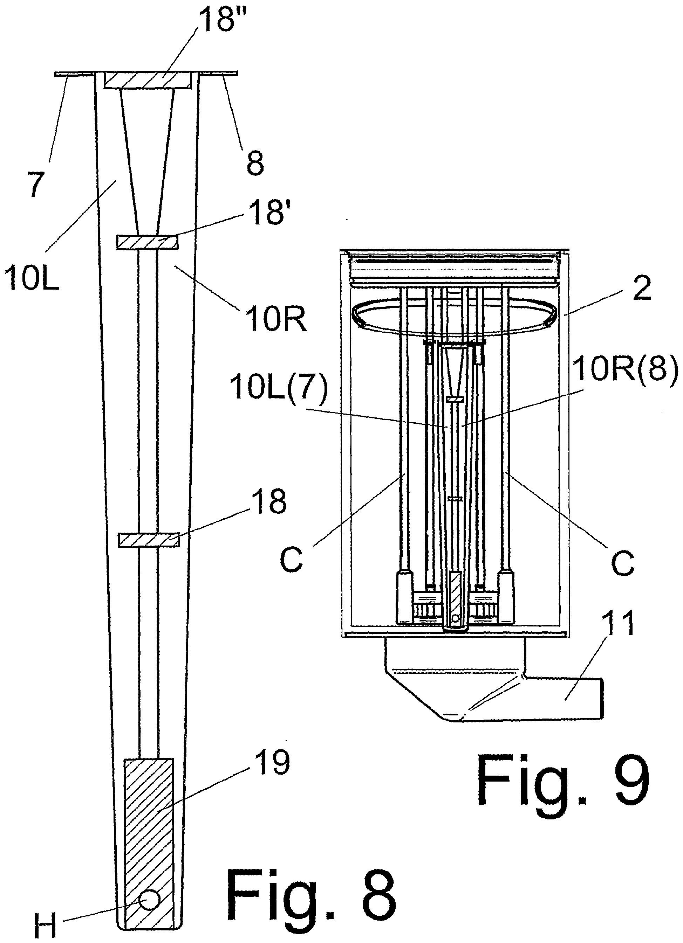

In Fig. 8 is shown a different slit structure, which is built to serve two functions at the same time. It consists of two leaves 10L and 10R, each in an anti-corrosive metal sheet. However, the two parts are insulated from one another by means of ceramic elements 18, 18', and 18" as well as a bottom ceramic element 19 with a hole H. This means that this structure not only provides the calibrated slit 10 but also the electrodes corresponding to the measurement electrodes 7 and 8. This way the final damping of the milk stream occurs as it passes the slit and it provides further stability to the measurement.

In Fig. 9 is shown how this split slit structure is disposed in the lower part 2 of the measuring device according to the invention. In place of the measurement electrodes there is now provided a pair of carriers C for the whole structure for stability purposes.

All the measurements are electronic in nature and the controls are a combination of electrical and vacuum technology. They are all controlled by a controller in the upper part of the measuring device that has the task of strobing the inputs, performing conductivity measurements, comparing measurements, both between electrodes and with historical data, either from the same milking session or from previous sessions and/or previous visits by the same milking animal. Furthermore there is a facility for manual data entry, comprising security code information or data entry from key signal bearing devices (RFID), and there is provided communication, both wireless and via a data bus. Various alarm conditions may be signalled, either on the controller itself or transmitted to remote locations.

## Claims

1. A device for the measurement of the flow of milk in a mixture of milk and air, comprising air separation means (5) and a leaky measuring chamber (6) with conductivity electrodes (7, 8, 13, 14), whereby the level of milk in the measuring chamber is converted to a flow measure,
**characterized in that** elements are provided to cause the milk to be distributed to flow essentially only towards a first array of measurement electrodes (13, 14, 13', 14'), while a second array of measurement electrodes (7, 8) is covered to the instant level of the milk in the measuring chamber (6), thereby generating a continuous level indication based on conductivity.

2. A device according to claim 1, **characterized in that** the first array (13, 14, 13', 14') of measurement electrodes are reference electrodes for the measurement.

3. A device according to claim 1, **characterized in that** the first array of measurement electrodes consists of two pairs (13, 14; 13', 14') that are interconnected in such a way that the lowest conductivity measurement between members of one pair is automatically selected as the reference value at any one instant.

4. A device according to claim 1, **characterized in that** the elements that distribute the flow of milk comprise a saddle-shaped plate (5) over which the milk flows, with lower edges close to the reference electrodes (13, 14).

5. A device according to claim 1, **characterized in that** the leak of the measuring chamber (6) is a vertical slit (10) in a vertical discharge tube (9) fitted inside an essentially ring-shaped measuring chamber.

6. A device according to claim 5, **characterized in that** the vertical discharge tube (9) is placed excentrically inside the measuring chamber (6', 6").

7. A device according to claim 5, c**haracterized in** that the elements that distribute the flow of milk comprise an inclined tray (12), directing the flow primarily to those parts (6') of the essentially ring-shaped measuring chamber that are farthest from the reference and measurement electrodes (13, 14, 13', 14', 7, 8).

8. A device according to claim 5, **characterized in that** the elements that distribute the flow of milk comprise an inlet tube (3') that is directed tangentially to the measuring chamber (6) and that the flow of milk performs a rotating, foam-breaking movement around the outer perimeter of the measuring chamber before encountering the arrays of electrodes.

9. A device according to claim 8, **characterized in that** the flow is further controlled by means of a baffle (15) providing a ring-shaped opening (16) close to the outer perimeter of the measuring chamber (6).

10. A device according to claim 5, **characterized in that** the vertical slit (10) increases its width (W) towards the top.

11. A device according to claim 5, **characterized in that** the vertical slit is made of two conductive parts (10L, 10R) that are insulated from one another.

12. A device according to claim 11, **characterized in that** the insulated parts (10L, 10R) function as measurement electrodes (7, 8).

13. A device according to any of the claims 5-12, **characterized in that** the measuring chamber (6) and the discharge tube (9) form a separable lower section (2) of the device, while the electrodes (7, 8, 13, 14) and the distributing elements (5) form an upper section (1) of the device, which furthermore contains electronic, calculating, data transmission, and indicating means that comprise alarm means.

14. The use of a device according to the above claims in an apparatus for total surveillance of an automated milking process, further comprising the use of a pulsator monitor and a mechanical milking claw attachment and disengagement device.

## Patentansprüche

1. Eine Vorrichtung für das Messen von Milchströmung einer Milch- und Luftmischung, umfassend Luftausscheidemittel (5), und eine undichte Messkammer (6) mit Leitfahigkeitselektroden (7, 8, 13,14), wobei das Niveau von Milch im Messkammer in einer Strömungsmessung umgerechnet wird, **dadurch gekennzeichnet, dass** Teile vorgesehen sind, die dafür sorgen, dass die Milch im wesentlichen nur in Richtung einer ersten Gruppe von Messelektroden (13, 14, 13', 14') strömt, während eine zweite Gruppe von Messelektroden (7,8) zu dem augenblicklichen Niveau von Milch im Messkammer gedeckt ist, wodurch eine kontinuierliche auf Leitfähigkeit basierte Niveauweisung generiert wird.

2. Eine Vorrichtung gemäss Anspruch 1, **dadurch gekennzeichnet, dass** die erste Gruppe von Messelektroden (13, 14, 13', 14') Referenzelektroden für die Messung ist.

3. Eine Vorrichtung gemäss Anspruch 1, **dadurch gekennzeichnet, dass** die erste Gruppe von Messelektroden aus zwei Paaren (13, 14; 13', 14') besteht, die in solcher Weise mit einander verbunden sind, dass die niedrigste Leitfähigkeitsmessung zwischen Mitgliedern eines Paares automatisch als augenblickliches Referenzwert gewählt wird.

4. Eine Vorrichtung gemäss Anspruch 1, **dadurch gekennzeichnet, dass** die Teile, die die Milchströmung verteilen eine sattelförmige Platte (5)umfasst, über welche die Milch strömt, mit unteren Kanten nahe an den Referenzelektroden (13, 14).

5. Eine Vorrichtung gemäss Anspruch 1, **dadurch gekennzeichnet**, dass(10) die Undichtigkeit von der Messkammer (6) einen lotrechten Schlitz in einer lotrechten Auslaufrohr (9) ist, welches innerhalb einer im wesentlichen ringförmigen Messkammer angebracht ist.

6. Eine Vorrichtung gemäss Anspruch 5, **dadurch gekennzeichnet**, das das lotrechte Auslaufrohr (9) exzentrisch innerhalb der im wesentlichen ringförmigen Messkammer (6', 6") angebracht ist.

7. Eine Vorrichtung gemäss Anspruch 5, **dadurch gekennzeichnet, dass** die Teile, die die Milchströmung verteilen, ein schräggestelltes Tablett umfasst, das die Strömung im wesentlichen zu den Teilen (6') von der ringförmigen Messkammer die sich am fernsten von den Referenz- und Messelektroden (13, 14, 13', 14', 7, 8) befinden.

8. Eine Vorrichtung gemäss Anspruch 5, **dadurch gekennzeichnet, dass** die Teile, die die Milchströmung verteilen, eine Einlaufrohr (3') umfasst, die tangential zu der Messkammer (6) gerichtet ist, und dass die Milchströmung eine drehende, schaumbrechende Bewegung entlang dem äusseren Umfang der Messkammer hat, bevor sie die Gruppen von Elektroden trifft.

9. Eine Vorrichtung gemäss Anspruch 8, **dadurch gekennzeichnet, dass** die Strömung weiter geleitet wird mittels einer Abschirmvorrichtung (15), die eine ringförmige Öffnung (16) nahe dem äusseren Umfang der Messkammer (6)hervorbringt.

10. Eine Vorrichtung gemäss Anspruch 5, **dadurch gekennzeichnet, dass** die Weite (W) des lotrechten Schlitzes (10) nach oben ansteigt.

11. Eine Vorrichtung gemäss Anspruch 5, **dadurch gekennzeichnet, dass** der lotrechte Schlitz aus zwei elektrisch leitende Teilen (10L, 10R)besteht, die unter einander isoliert sind.

12. Eine Vorrichtung gemäss Anspruch 11, **dadurch gekennzeichnet, dass** die isolierten Teilen (10L, 10R) als Messelektroden (7, 8) funktionieren,

13. Eine Vorrichtung gemäss einer der Ansprüchen 5-12, **dadurch gekennzeichnet, dass** die Messkammer (6) und das Auslaufrohr (9) ein wegnimmbares Unterteil (2) des Gerätes darstellen, während die Elektroden (7, 8, 13, 14) und die strömungsverteilende Teilen (5) ein Oberteil (1) darstellen, welches zusätzlich elektronische, berechnende, Datenüberführungsvorrichtungen sowie Anzeigevorrichtungen, einschliesslich Alarmvorrichtungen, umfasst.

14. Die Verwendung einer Vorrichtung gemäss die obigen Ansprüche in einem Gerät für die totale Überwachung eines automatischen Melkvorgangs, unter Anwendung einer Pulsatorüberwachungsvorrichtung sowie mechanische Milchsammelstück-Vorführungs- und Zurückziehmitteln.

## Revendications

1. Dispositif pour la mesure du débit de lait dans une mélange d'air et du lait, comprenant des moyens (5) pour la séparation de l'air et une chambre de mesure (6) non-étanche avec des électrodes adaptés à la mesure de la conductivité, dans lequel le niveau du lait dans la chambre de mesure est converti en débit d'écoulement, **caractérisé en ce que** des élements sont pourvu pour conduire le lait essentiellement uniquement vers une première groupe d'électrodes de mesure (13, 14, 13', 14'), tandis qu'une deuxième groupe d'électrodes de mesure (7, 8) sont couvert jusqu'au niveau du lait dans la chambre de mesure (6), ainsi établissant une indication du niveau continu basé sur la conductivité.

2. Dispositif selon revendication 1, **caractérisé en ce que** la première groupe d'électrodes (13, 14, 13', 14') sont des électrodes de référence pour la mesure.

3. Dispositif selon revendication 1, **caractérisé en ce que** la première groupe d'électrodes de mesure est constituée par deux paires (13, 14; 13', 14'), interconnectés dans une façon telle que la mesure de conductivité la plus basse entre membres d'une paire est automatiquement sélectionné comme la valeur de référence à chaque instant.

4. Dispositif selon revendication 1, **caractérisé en ce que** les élements qui distribuisent l'écoulement du lait comprennent une plaque en forme de selle sur laquelle écoule le lait, avec des parties basses proche aux électrodes de référence (13, 14).

5. Dispositif selon revendication 1, **caractérisé en ce que** le mécanisme de fuite de la chambre de mesure (6) est une fente verticale (10) dans un tuyau d'échappement (9) verticale monté dans l'intérieur d'une chambre de mesure effectivement en forme d'anneau.

6. Dispositif selon revendication 5, **caractérisé en ce que** le tuyau de débit verticale (9) est situé excentrique dans la chambre de mesure (6', 6").

7. Dispositif selon revendication 5, **caractérisé en ce que** les élements qui distribuisent l'écoulement du lait comprennent un tableau incliné (12) qui de préférence conduit l'écoulement aux parties de la chambre de mesure en forme d'anneau qui sont distancées des électrodes de réference et de mesure (13, 14, 13', 14', 7, 8).

8. Dispositif selon revendication 5, **caractérisé en ce que** les élements qui distribuisent l'écoulement du lait comprennent un tuyau d'admission (3') tangentielle à la chambre de mesure (6) et que l'écoulement du lait se mouve dans une façon rotative autour de la périphérie de la chambre de mesure, détruissant l'écume, avant d'encontrer les groupes d'électrodes.

9. Dispositif selon revendication 8, **caractérisé en ce que** l'écoulement est en plus controlé par une chicane (15) fournissant une ouverture en forme d'anneau (16) pres de la périphérie éxterieur de la chambre de mesure (6).

10. Dispositif selon revendication 5, **caractérisé en ce que** le largeur (W) de la fente verticale (10) croît vers le haut.

11. Dispositif selon revendication 5, **caractérisé en ce que** la fente verticale est constitué de deux parts (10L, 10R) conduissants qui sont mutuellement isolé.

12. Dispositif selon revendication 11, **caractérisé en ce que** les parts isolés (10L, 10R) fonctionnent comme électrodes de mesure (7,8).

13. Dispositif selon chacune des revendications 5-12, **caractérisé en ce que** la chambre de mesure (6) et le tuyau d'échappement (9) forment une section inférieure (2) séparable du dispositif, et que les électrodes et les élements de distribution de l'écoulement forment une section superieure (1) que contient en plus des moyens électroniques, pour le calcul, pour transmission des données, et pour l'indication y compris des alarmes.

14. Procedé selon chacune des revendications précedent dans un appareil constituant la surveillence totale d'une opération automatique de traité, en outre comprenant l'utilisation d'un moniteur pour pulsateurs et une structure mécanique pour attacher et retirer une griffe de traite.
